# EUROPEAN PATENT SPECIFICATION

(11) **EP 1 270 354 B1**
(45) Date of publication and mention of the grant of the patent: **05.09.2007**
(21) Application number: 02013380.7
(22) Date of filing: 19.06.2002
(51) Int. Cl.: B60T 15/20

(54) **Pneumatic control valve for controlling braking of a towed vehicle**
Pneumatisches Steuerventil für Bremssteuerung eines gezogenen Fahrzeuges
Valve de régulation pneumatique pour contrôler le freinage d'un véhicule remorqué

(30) Priority: 21.06.2001 IT TO20010600
(43) Date of publication of application: 02.01.2003
(73) Proprietor: KNORR-BREMSE SISTEMI PER AUTOVEICOLI COMMERCIALI S.P.A., 20043 Arcore (Milano) (IT)
(72) Inventor: Boldoni, Alessandro, 20143 Arcore (Milano) (IT); Rapa, Antonio, 20052 Monza (Milano) (IT); Battistella, Denis, 20037 Paderno Dugnano (Milano) (IT); De Pietri, Mauro, 20068 Peschiera Borromeo (Milano) (IT)
(74) Representative: Quinterno, Giuseppe

(56) References cited:
- EP-A- 0 308 375
- EP-A- 0 371 935
- EP-A- 0 478 515

## Description

The present invention relates to a valve unit for use in a pneumatic braking system of a tractor unit, having two lines, for supply and for control, respectively, for controlling the braking of a towed vehicle, such as, for instance, known from EP0478515 A, EP0371935 A or EP0308375A.

More specifically, the invention relates to a valve unit comprising a hollow body in which are defined:
a supply chamber to be connected to a pressure source through a supply opening of the body, and to a line for supplying pressure to the braking system of the towed vehicle through an output opening,
a exhaust chamber which can communicate with the atmosphere,
at least one control chamber for receiving a braking-control pressure through an inlet opening, and
an output chamber to be connected to a line for supplying the braking-control pressure, which can be moderated, to the braking system of the towed vehicle,
relay-valve means, controlled by the pressure in the control chamber, being provided in the body and comprising:
   a valve-closure unit which is movable in the body and can cooperate with a first valve seat and with a second valve seat in order to control communication between the output chamber and the exhaust chamber and between the output chamber and the supply chamber, and
   a movable control device which is mounted for sliding in the body in a leaktight manner and can control the position of the closure unit in a manner such that, during service braking, the output chamber is disconnected from the exhaust chamber and is connected to the supply chamber,
   a stop valve also being provided in the body and including a closure member which is carried by the closure unit of the relay-valve means and cooperates with a seat formed in the supply chamber in order to disconnect the output chamber from the supply inlet, during service braking, when the pressure difference between the control chamber and the output chamber exceeds a predetermined value.

The aim of the present invention is to provide a valve unit of the type defined above which has a simplified structure with a smaller number of parts and of sealing members, and which has improved reliability in operation.

This and other aims are achieved, according to the invention, by a valve unit of the type specified above, characterized in that the movable control device of the relay-valve means comprises a single piston which, during service braking, can perform an operative movement between a rest position and a floating, working position and, when the pressure difference between the control chamber and the output chamber exceeds the predetermined value, can perform a further movement in order to urge the closure unit to a position in which the closure unit brings about closure of the seat of the stop valve.

Further characteristics and advantages of the invention will become clear form the following detailed description, given purely by way of non-limiting example, with reference to the appended drawings, in which:
Figure 1 is a partial sectioned view of a valve unit according to the invention, in particular, of a so-called triple-control servo-distributor with an incorporated servo-diverter, and
Figure 2 is a partial sectioned view of a variant.

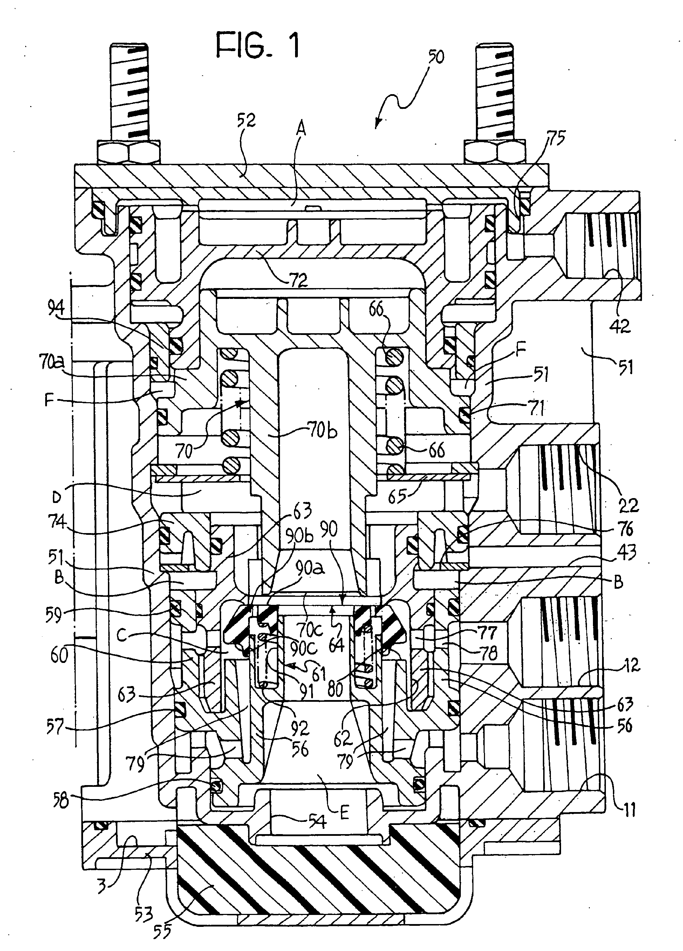

A triple-control servo-distributor formed in accordance with the present invention is generally indicated 50 in Figure 1. It comprises a body 51 which, in the embodiment illustrated, has an elongate, substantially cylindrical shape.

The body 51 is hollow and, in its lower portion, has a supply connector 11 to be connected to a pressure reservoir of the braking system of a tractor unit.

An output connector of the body 51, indicated 12, is intended to be connected to the (so-called automatic) line for supplying pressure to the reservoirs of the braking system of a towed vehicle. As can be seen from the drawing, in the embodiment shown by way of example, the connectors 11 and 12 are formed in respective positions which are offset axially relative to the longitudinal axis of the body 51.

A further inlet connector formed at the upper end of the body 51 is indicated 42.

Between the inlet connectors 12 and 42, the body 51 has a further inlet connector 43 and a further output connector 22.

For convenience of reading by persons skilled in the art, the above-described connectors have been marked with reference numerals corresponding to marking conforming to international norms for the identification of the orifices of apparatus for braking systems.

The body 51 is closed at the top by a cover 52. A shaped body 53 is connected to the bottom of the body 51. An exhaust duct 3, which can communicate with the atmosphere, is defined between this body 53 and the lower end of the body 51.

The lower portion of the body 51 has a central opening or duct 54 which faces a silencer 55, made of plastics material, which controls communication between this opening or duct 54 and the exhaust duct 3.

A shaped, annular body 56 is positioned in the lower portion of the body 51. The lower portion of the body 56 carries, externally, a sealing ring 58 which bears against a portion of the wall of the body 51 located below the inlet connector 11.

The upper portion of the shaped body 56 forms a substantially cylindrical outer skirt 60 and an inner skirt 61, between which an upwardly-open annular channel 62 is defined.

The outer skirt 60 of the shaped body 56 carries two sealing rings 57 and 59 of which the former bears against a portion of the wall of the body 51 which is disposed between the connectors 11 and 12, whereas the latter bears against a portion of this wall which is disposed between the connectors 12 and 43.

A further annular body, indicated 63, has a lower portion which extends into the recess 62 of the body 56, and an upper portion which extends through a stationary ring 74, in a leaktight manner.

In its intermediate portion, the annular body 63 forms an internal valve seat, indicated 64.

Positioned above the stationary ring 74 is a washer-like element 65 on which the lower end of a helical spring 66 bears; the upper end of the spring 66 reacts against the head of a generally mushroom-shaped piston 70.

The radially peripheral portion of the head 70a of the piston 70 has a stepped profile and carries an outer sealing ring 71 which bears on the wall of the body 51.

The piston 70 has a tubular shank 70b which extends downwards inside the spring 66, through the washer-like element 65 and through the ring 74 and the annular body 63, as far as the vicinity of the seat 64. The distal end of the tubular shank 70b of the piston 70 also constitutes an annular valve seat, indicated 70c.

A further control piston, indicated 72, is mounted for sliding in a leaktight manner in the upper portion of the body 51. The upper portion of this piston 72 extends around the upper portion of the head of the control piston 70.

A plurality of chambers is defined in the body 51 of the valve unit 50.

A first control chamber of variable volume, indicated A, is defined above the control piston 72. This chamber communicates with the inlet connector 42 through a duct, indicated 75. The connector 42 is intended to be connected to the output of one of the two sections of a duplex or tandem distributor (not shown) which, when operated by the brake pedal, controls braking in the two independent circuits of the tractor unit.

A further chamber of variable volume, indicated B, is defined between the ring 74, the annular body 63, and the upper portion of the outer skirt of the annular body 56. The chamber B communicates with the connector 43 through a duct, indicated 76. This connector 43 is intended to be connected to a manually-operated valve or distributor for controlling the parking and emergency braking. The chamber B is normally kept under pressure; the pressure is removed from this chamber as a result of the operation of the manual valve or distributor for controlling the parking and emergency braking system, connected to the connector 43.

A supply chamber, indicated C, is defined in the lower portion of the annular body 63, below the valve seat 64, around the inner skirt 61 of the annular body 56. This supply chamber C is permanently in communication with the connector 12 through ducts 77 and 78 formed in the bodies 56 and 63. This chamber can also communicate with the inlet connector 11 through a plurality of substantially L-shaped ducts 79 formed in the annular body 56. The vertical portions of the ducts 79 open, at the top, in an annular valve seat 80 formed in the shaped body 56 and facing the supply chamber C.

In operation, the pressurized air coming from a reservoir of the braking system of the tractor unit, through the inlet connector 11 and the supply chamber C, reaches the outlet connector 12 and, through the automatic line, reaches a pressure reservoir of the braking system of the towed vehicle.

A valve-closure unit, indicated 90, is mounted movably below the valve seat 64, around the inner skirt 61 of the shaped body 56. A channel 91 is in fact defined in this skirt and houses a helical spring 92 which urges the closure unit 90 towards the valve seat 64.

The closure unit 90 has, at its upper end, two concentric, annular surfaces 90a and 90b, that is, an inner surface and an outer surface, respectively, one for cooperating with the seat 70c of the control piston 70 and the other with the valve seat 64.

At its opposite end, that is, at the end facing downwards, the closure unit 90 has an annular closure surface 90c which can cooperate with the valve seat 80 formed in the shaped body 56.

The ways in which the closure unit 90 is coupled with the valve seats 70c, 64 and 80 will be described further below.

A chamber of variable volume, indicated D, is disposed between a portion of the wall of the body 51, the lower surface of the head and the outer surface of the rod of the control piston 70, the stationary annular element 74, and the body 63. The chamber D communicates permanently with the output connector 22 which is to be connected to a line for supplying the braking-control pressure that can be moderated to the braking system of the towed vehicle.

An exhaust chamber, indicated E, is defined in the annular body 56 and can communicate with the exhaust duct 3 through the silencer 55.

A control chamber, indicated F, is disposed between the head 70a of the control piston 70, the lower end of the control piston 72, and a stationary ring 94. The chamber F is to be connected, for example, to the output of the other of the two sections of a duplex or tandem distributor which, when operated by the brake pedal, brings about braking in the two independent circuits of the tractor unit.

The valve unit described above operates in the following manner.

In the drawing, the unit (the triple-control servo-distributor) is shown in the condition adopted at rest, during normal running of the tractor unit. In this situation, the connector 43 is supplied with pressurized air coming from the hand valve or distributor for controlling the parking and emergency brakes. This pressure acts on the shaped bodies 56 and 63, tending to keep them in the position shown.

The pressurized air which reaches the inlet connector 11 from a reservoir of the tractor unit, reaches the supply chamber C, through the ducts 79, and the output connector 12 and hence the automatic supply line for the pressure reservoirs of the trailer, through the ducts 77 and 78.

The annular ring 90b of the closure unit 90 is disposed against the seat 64 of the body 63 and the inner ring 90a of this closure unit is spaced from the seat 70c of the control piston 70. The chamber D does not therefore communicate with the chamber C but communicates with the exhaust chamber E. No pressure is therefore supplied to the trailer braking-control line in which the pressure can be moderated and which is connected to the connector 22.

If the brake pedal of the tractor unit is now operated, pressure is supplied to the chambers A and F. These pressures cause the control pistons 72 and 70 to descend, against the action of the reaction spring 66. After a predetermined travel, the tubular rod 70b of the control piston 70 engages the inner ring 90a of the closure unit 90 with its end seat 70c, disconnecting the chamber D from the exhaust chamber E. Further downward movement of the control piston 70 moves the ring 90b of the closure unit 90 away from the seat 64 so that the chamber D is put into communication with the supply chamber C. The compressed air present in the chamber C goes through the chamber D to bring about braking of the towed vehicle through the line in which the pressure can be moderated and which is connected to the connector 22.

During service braking, the control piston 70 adopts a floating working position, in the sense that it does not reach an abutment surface but can perform a possible further downward movement, as will be described below.

If, during service braking, the trailer braking-control line in which the pressure can-be moderated (connected to the connector 22) is broken, pressure fades away in the chamber D. The control piston 70 can therefore move further downwards, acting on the closure unit 90 until its lower ring 90c is brought into abutment with the valve seat 80, cutting off communication between the inlet connector 11 and the output connector 12. The latter, however, is put into communication with the chamber D, and hence with the atmosphere, through the breakage point in the line in which the pressure can be moderated and which is connected to the connector 22. The automatic line connected to the connector 12 is thus exhausted to the atmosphere and this causes the automatic braking of the towed vehicle to intervene, in known manner.

In comparison with other solutions of the prior art, the valve unit described above has the advantage of considerable structural simplicity and, in particular, a small number of pistons and of sealing rings. In the embodiment described above, the sealing ring 71 associated with the control piston 70 moves upon each braking operation and there is therefore no danger of it "sticking" to the wall of the body 51.

The valve unit according to the invention is also very reliable.

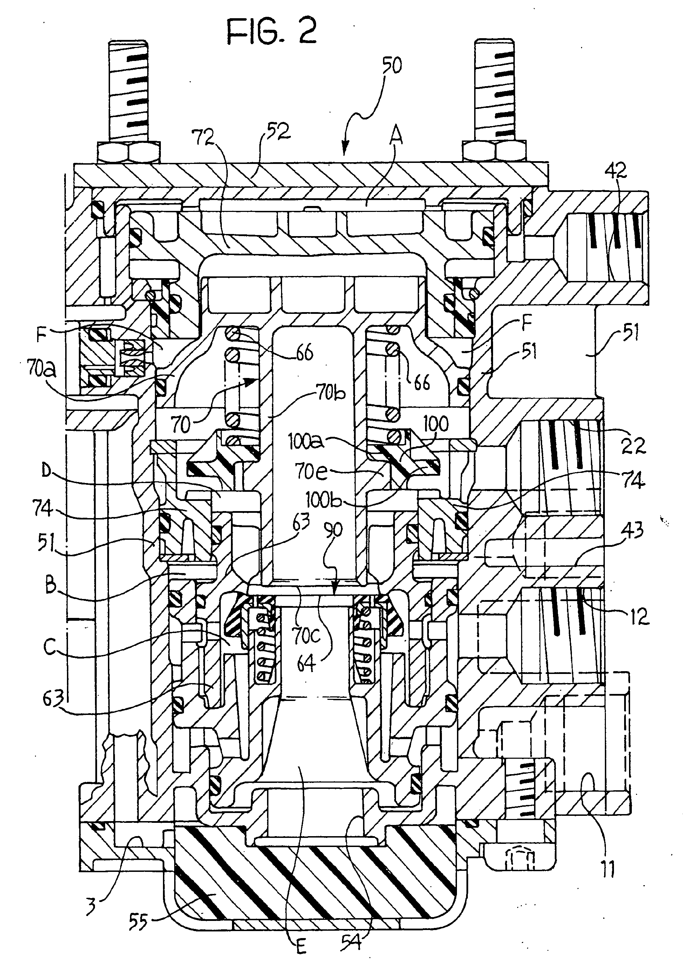

Figure 2 shows a variant which differs from the unit of Figure 1 substantially solely insofar as will now be described. In Figure 2, parts and elements which have already been described have been attributed the same reference numerals/letters as were used above.

In the variant of Figure 2, the lower end of the spring 66 reacts against a ring 100 which has an inner edge 100a that bears on an outer projection 70e of the tubular rod 70b of the piston 70. The ring 100 also has an outer edge 100b which projects radially beyond the projection 70e of the piston 70 and, as it moves downwards, can come into abutment with the ring 74. The distance between the outer edge 100b of the ring 100 and the facing surface of the ring 74, at rest, is preferably greater than the distance between the valve seat 70c of the piston 70 and the closure unit 90, at rest.

During normal braking, the piston 70 descends and opens the valve 90-64. During the descent of the piston 70, the spring 66 travels along with it, without being compressed, since the ring 100 also descends, together with the piston, without normally coming into abutment with the stationary ring 74. In contrast with what occurs in the valve unit of Figure 1, the spring 66 does not therefore oppose the descent of the piston 70.

Only in the event of "heavy" braking, or in the event of leakage or breakage in the duct connected to the connector 22 does the piston 70 descend to an extent such that the spring 66 is compressed, after the ring 100 has stopped on the ring 74.

The variant of Figure 2 thus has the advantage that, during normal braking, the spring 66 does not oppose the control piston and the valve unit has improved sensitivity.

Naturally, the principle of the invention remaining the same, the forms of embodiment and details of construction may be varied widely with respect to those described and illustrated purely by way of non-limiting example, without thereby departing from the scope of the present invention.

## Claims

1. A valve unit (50), particularly for use in a pneumatic braking system of a tractor unit, having two lines, for supply and for control, respectively, for controlling the braking of a towed vehicle, comprising a hollow body (51) in which are defined:
a supply chamber (C) to be connected to a pressure source through a supply opening (11) of the body (51), and to a line for supplying pressure to the braking system of the towed vehicle through an output opening (12),
an exhaust chamber (E) which can communicate with the atmosphere,
at least one control chamber (F) for receiving a braking-control pressure, and
an output chamber (D) to be connected to a line for supplying the braking-control pressure, which can be moderated, to the braking system of the towed vehicle,
relay-valve means (70, 90, 64), controlled by the pressure in the control chamber (F), being provided in the body (51) and comprising:
a valve-closure unit (90) which is movable in the body (51) and can cooperate with a first valve seat and with a second valve seat (70c, 64) in order to control communication between the output chamber (D) and the exhaust chamber (E) and between the output chamber (D) and the supply chamber (C), and
a movable control device (70) which is mounted for sliding in the body (51), in a leaktight manner, between the control chamber (F) and the output chamber (D), and which can control the position of the closure unit (90) in a manner such that, during service braking, the output chamber (D) is disconnected from the exhaust chamber (E) and is connected to the supply chamber (C),
a stop valve (80, 90c) also being provided in the body (51) and including a closure member (90c) which forms part of the closure unit (90) and cooperates with a seat (80) formed in the supply chamber (C) in order to disconnect the output chamber (D) from the supply inlet (11), during service braking, when the pressure difference between the control chamber (F) and the output chamber (D) exceeds a predetermined value,
the valve unit being **characterized in that** the movable control device of the relay-valve means comprises a single piston (70) which, during service braking, can perform an operative movement between a rest position and a floating, working position and, when the pressure difference between the control chamber (F) and the output chamber (D) exceeds the predetermined value, can perform a further movement towards a position in which it can bring about closure of the seat (80) of the stop valve (80, 90c).

2. A valve unit according to Claim 1 in which resilient reaction means (66) are associated with the piston (70) and can oppose its movement only after it has performed a predetermined travel from the rest position.

3. A valve unit according to Claim 2 in which the resilient reaction means (66) are interposed between a head portion (70a) of the piston (70) and a ring (100) which can move, together with the piston (70), for the predetermined travel, and can come into abutment with stop means (74) upon completion of this travel.

## Patentansprüche

1. Ventileinheit (50), insbesondere zur Verwendung in einem Druckluftbremssystem einer Zugmaschineneinheit, welche zwei Leitungen für die Zufuhr bzw. die Steuerung zum Kontrollieren der Bremsung eines gezogenen Fahrzeugs aufweist und einen hohlen Körper (51) umfasst, in dem Folgendes definiert ist:
eine Zufuhrkammer (C), die durch eine Zufuhröffnung (11) des Körpers (51) an einer Druckquelle und durch eine Ausgangsöffnung (12) an einer Leitung zum Aufbringen von Druck auf das Bremssystem des gezogenen Fahrzeugs anzuschließen ist,
einen Auspufftopf (E), der mit der Atmosphäre in Verbindung stehen kann, zumindest eine Steuerkammer (F) zum Aufnehmen eines Bremskontrolldrucks und
eine Ausgangskammer (D), die an einer Leitung zum Aufbringen des Bremskontrolldrucks, der abgemildert werden kann, auf das Bremssystem des gezogenen Fahrzeugs anzuschließen ist,
durch den Druck in der Steuerkammer (F) gesteuerte Servoventilmittel (70, 90, 64), die im Körper (51) vorgesehen sind und Folgendes umfassen:
eine Ventilverschlusseinheit (90), die im Körper (51) beweglich ist und mit einem ersten Ventilsitz und einem zweiten Ventilsitz (70c, 64) zusammenwirken kann, um die Kommunikation zwischen der Ausgangskammer (D) und dem Auspufftopf (E) und zwischen der Ausgangskammer (D) und der Zufuhrkammer (C) zu steuern, und
eine bewegliche Steuervorrichtung (70), welche zum Gleiten im Körper (51) in einer lecksicheren Art und Weise zwischen der Steuerkammer (F) und der Ausgangskammer (D) montiert ist und die Position der Verschlusseinheit (90) in einer solchen Art und Weise steuern kann, dass die Ausgangskammer (D) während einer Betriebsbremsung vom Auspufftopf (E) getrennt und mit der Zufuhrkammer (C) verbunden wird,
ein Absperrventil (80, 90c), das ebenfalls im Körper (51) vorgesehen ist und ein Verschlussglied (90c) umfasst, welches zur Verschlusseinheit (90) gehört und mit einem in der Zufuhrkammer (C) gebildeten Sitz (80) zusammenwirkt, um die Ausgangskammer (D) während einer Betriebsbremsung vom Zufuhreingang (11) zu trennen, wenn der Druckunterschied zwischen der Steuerkammer (F) und der Ausgangskammer (D) einen vorbestimmten Wert überschreitet,
wobei die Ventileinheit **dadurch gekennzeichnet ist, dass** die bewegliche Steuervorrichtung der Servoventilmittel einen einzelnen Kolben (70) umfasst, der während einer Betriebsbremsung eine operative Bewegung zwischen einer Ruheposition und einer schwebenden Arbeitsposition durchführen kann und, wenn der Druckunterschied zwischen der Steuerkammer (F) und der Ausgangskammer (D) den vorbestimmten Wert überschreitet, eine weitere Bewegung in Richtung einer Position durchführen kann, in welcher er ein Verschließen des Sitzes (80) des Absperrventils (80, 90c) bewirken kann.

2. Ventileinheit gemäß Anspruch 1, wobei elastische Reaktionsmittel (66) mit dem Kolben (70) verbunden sind und dessen Bewegung entgegenwirken können, erst nachdem dieser einen vorbestimmten Hub aus der Ruheposition vollführt hat.

3. Ventileinheit gemäß Anspruch 2, wobei die elastischen Reaktionsmittel (66) zwischen einem Kopfteil (70a) des Kolbens (70) und einem Ring (100) eingeschoben sind, welcher sich zusammen mit dem Kolben (70) für den vorbestimmten Hub bewegen und nach Beendigung dieses Hubs an Anschlagmitteln (74) anstoßen kann.

## Revendications

1. Unité de valve (50), en particulier pour une utilisation dans un système de freinage pneumatique d'une unité de tracteur, ayant deux conduites, pour l'alimentation et pour la commande, respectivement, pour commander le freinage d'un véhicule remorqué, comprenant un corps creux (51) dans lequel sont définis :
une chambre d'alimentation (C) devant être connectée à une source de pression au moyen d'une ouverture d'alimentation (11) du corps (51) et à une conduite pour fournir de la pression au système de freinage du véhicule remorqué au moyen d'une ouverture de sortie (12),
une chambre d'échappement (E) qui peut communiquer avec l'atmosphère,
au moins une chambre de commande (F) destinée à recevoir une pression de commande de freinage, et
une chambre de sortie (D) devant être connectée à une conduite pour fournir la pression de commande de freinage, qui peut être modérée, au système de freinage du véhicule remorqué,
des moyens de valve relais (70, 90, 64), commandés par la pression dans la chambre de commande (F), étant disposés dans le corps (51) et comprenant :
une unité de fermeture de valve (90) qui est mobile dans le corps (51) et peut coopérer avec un premier siège de valve et avec un second siège de valve (70c, 64) afin de commander la communication entre la chambre de sortie (D) et la chambre d'échappement (E) et entre la chambre de sortie (D) et la chambre d'alimentation (C), et
un dispositif de commande mobile (70) qui est monté pour coulisser dans le corps (51), de manière étanche, entre la chambre de commande (F) et la chambre de sortie (D), et qui peut commander la position de l'unité de fermeture (90) de manière à ce que, au cours du freinage de service, la chambre de sortie (D) soit déconnectée de la chambre d'échappement (E) et soit connectée à la chambre d'alimentation (C),
une valve d'arrêt (80, 90c) étant également disposée dans le corps (51) et comprenant un obturateur (90c) qui fait partie de l'unité de fermeture (90) et qui coopère avec un siège (80) formé dans la chambre d'alimentation (C) afin de déconnecter la chambre de sortie (D) de l'orifice d'alimentation (11), au cours du freinage de service, lorsque la différence de pression entre la chambre de commande (F) et la chambre de sortie (D) est supérieure à une valeur prédéterminée,
l'unité de valve étant **caractérisée en ce que** le dispositif de commande mobile des moyens de valve relais comprend un piston unique (70) qui, au cours du freinage de service, peut effectuer un mouvement de fonctionnement entre une position de repos et une position flottante, de travail et, lorsque la différence de pression entre la chambre de commande (F) et la chambre de sortie (D) est supérieure à la valeur prédéterminée, peut effectuer un mouvement supplémentaire vers une position dans laquelle il peut amener la fermeture du siège (80) de la valve d'arrêt (80, 90c).

2. Unité de valve selon la revendication 1, dans laquelle des moyens de réaction élastiques (66) sont associés au piston (70) et peuvent s'opposer à son mouvement uniquement après qu'il ait effectué une course de piston prédéterminée à partir de la position de repos.

3. Unité de valve selon la revendication 2, dans laquelle les moyens de réaction élastiques (66) sont intercalés entre une partie de tête (70a) du piston (70) et un segment (100) qui peut se déplacer, avec le piston (70), tout au long de la course de piston prédéterminée, et qui peut venir en butée avec des moyens d'arrêt (74) lors de l'achèvement de cette course de piston.
